# EUROPEAN PATENT APPLICATION

(11) **EP 4 424 579 A1**
(43) Date of publication of application: **04.09.2024**
(21) Application number: 23196344.8
(22) Date of filing: 08.09.2023
(51) Int. Cl.: B62M 6/75, B60K 7/00

(54) **ELECTRIC MOBILITY VEHICLE INCLUDING REAR WHEEL WITH TWIN GEARS**

(30) Priority: 02.03.2023 KR 20230027677
(71) Applicant: Korea mobility, Gwangju 61011 (KR)
(72) Inventor: PARK, Jeong seok, 62247 Gwangsan-gu, Gwangju (KR)
(74) Representative: De Bonis, Paolo

(57) **Abstract**

Disclosed is an electric mobility vehicle according to several embodiments of the present disclosure. The electric mobility vehicle may include a vehicle body frame, and a rear wheel positioned rearward of the vehicle body frame and having a hubless rim and twin output gears provided on an inner peripheral surface of the hubless rim.

## Description

### CROSS-REFERENCE TO RELATED APPLICATIONS

This application claims priority to and the benefit of Korean Patent Application No. 10-2023-0027677 filed in the Korean Intellectual Property Office on MARCH 02, 2023, the entire contents of which are incorporated herein by reference.

### TECHNICAL FIELD

The present disclosure relates to an electric mobility vehicle, and more particularly, to an electric mobility vehicle that rotates a rim without using a hub and a spoke.

### BACKGROUND ART

Because of recent environmental issues, 'micro-mobility vehicles', which are transportation means using environmental-friendly power such as electricity, are attracting attention. An electric bicycle, which is one of the micro-mobility vehicles, is a means very useful for urban driving because the electric bicycle equipped with a battery may conveniently move a long distance and travel on an inclined slope by using an electric motor. The electric bicycle is an environmental-friendly transportation means having economic feasibility because the electric bicycle uses no fossil fuel and emits no carbon.

The electric bicycle may selectively use human power or electrical energy by further mounting a battery and a motor on a typical bicycle that has a chain device and pedals to rotate a wheel. The electric bicycle generally has a structure of a traditional bicycle that operates in a state in which a fork, which is a steering part, is connected to a hub connected to spokes disposed inside a wheel. Specifically, the hub and a rim of the wheel may be connected by the spokes to adjust tension, absorb impact applied to a tire, and prevent deformation of the wheel.

The method of mitigating impact by using the spokes disperses the impact, which is applied to the tire, through the plurality of spokes. However, there is concern that the spokes are damaged because of accumulation of impact caused by long driving, aging of components, improper tension of the spokes, external accidents, and the like. In addition, when even one of the plurality of spokes is damaged, the tension between the spokes is unbalanced, which may cause secondary damage to the other spokes when the electric bicycle continues to travel. This damage may cause a serious injury to an occupant.

There have been attempts to remove the hub and the spokes without considering the structure of the traditional bicycle, thereby solving the problem and accident that occur when even one of the plurality of spokes is damaged. In addition, there have been attempts to provide structural breakthroughs, design changes, and possibilities breaking away from the structure having the hub and the spoke that have been used for a long period of time.

### [Document of Related Art]

### [Patent Document]

(Patent Document 1) Korean Patent No. 10-1896022 (registered on August 31, 2018)

### SUMMARY OF THE INVENTION

The present disclosure has been made in an effort to provide an electric mobility vehicle that rotates a rim without using a hub and a spoke.

To achieve the above-mentioned object, several embodiments of the present disclosure provide an electric mobility vehicle. The electric mobility vehicle may include a vehicle body frame, and a rear wheel positioned rearward of the vehicle body frame and having a hubless rim and twin output gears provided on an inner peripheral surface of the hubless rim.

Alternatively, the rear wheel may have twin input gears configured to engage with the twin output gears.

Alternatively, the twin input gears may include: a first input gear configured to engage with one of the twin output gears; a second input gear configured to engage with the other of the twin output gears; and a drive gear positioned between the first input gear and the second input gear.

Alternatively, the drive gear may have a larger diameter than each of the first and second input gears.

Alternatively, the twin output gears may include two helical gears.

Alternatively, the two helical gears may have oblique shapes symmetric to each other.

Alternatively, the rear wheel may further include a pair of bearing guides respectively having twin input gear accommodation portions configured to accommodate the twin input gears coaxially.

Alternatively, the pair of bearing guides may each have a main bearing guide on which at least one lubrication bearing is installed.

Alternatively, the rear wheel may further include a tire attached to an outer peripheral surface of the hubless rim.

Alternatively, the vehicle body frame may have a straight shape having a cylindrical open-type joint.

Alternatively, the vehicle body frame may include: a main frame having a straight shape; a rear wheel fixing part to which the rear wheel is connected; and a frame joint part formed as a cylindrical open type and configured to connect the main frame and the rear wheel fixing part so that the main frame and the rear wheel fixing part are rotatable.

Alternatively, the electric mobility vehicle may further include: a front wheel positioned forward of the vehicle body frame and having a hubless rim.

To achieve the above-mentioned object, several embodiments of the present disclosure provide a rear wheel for an electric mobility vehicle. The electric mobility vehicle may include a vehicle body frame, and the rear wheel may be positioned rearward of the vehicle body frame and include: a hubless rim; and twin output gears provided on an inner peripheral surface of the hubless rim.

The present disclosure may provide the electric mobility vehicle that rotates the rim without using a hub and a spoke.

### BRIEF DESCRIPTION OF THE DRAWINGS

FIG. 1 is a perspective view of an electric mobility vehicle to which a manual pedal part is connected according to several embodiments of the present disclosure.
FIG. 2 is a top plan view of the electric mobility vehicle illustrated in FIG. 1.
FIG. 3 is a perspective view of the electric mobility vehicle to which an electric motor part is connected according to several embodiments of the present disclosure.
FIG. 4 is a top plan view of the electric mobility vehicle illustrated in FIG. 3.
FIG. 5 is a view for explaining a foldable vehicle body frame according to several embodiments of the present disclosure.
FIG. 6 is an exploded view of the vehicle body frame according to several embodiments of the present disclosure.
FIG. 7 is a perspective view of a frame joint part according to several embodiments of the present disclosure.
FIG. 8 is a top plan view of the frame joint part according to several embodiments of the present disclosure.
FIG. 9 is an exploded view of the frame joint part according to several embodiments of the present disclosure.
FIG. 10 is a perspective view of a power connection part according to several embodiments of the present disclosure.
FIG. 11 is a top plan view of the power connection part according to several embodiments of the present disclosure.
FIG. 12 is a partial view of the electric mobility vehicle to which the manual pedal part is connected according to several embodiments of the present disclosure.
FIG. 13 is an exploded view of FIG. 12.
FIG. 14 is a view for explaining a process of connecting the manual pedal part to the vehicle body frame according to several embodiments of the present disclosure.
FIG. 15 is a partial view of the electric mobility vehicle to which the electric motor part is connected according to several embodiments of the present disclosure.
FIG. 16 is an exploded view of FIG. 15.
FIG. 17 is a view for explaining a process of connecting an electric motor to the vehicle body frame according to several embodiments of the present disclosure.
FIG. 18 is a top plan view of a rear wheel according to several embodiments of the present disclosure.
FIG. 19 is an exploded view of the rear wheel according to several embodiments of the present disclosure.
FIG. 20 is a flowchart for explaining an operation of the electric mobility vehicle according to several embodiments of the present disclosure.

### DETAILED DESCRIPTION

Various embodiments and/or various aspects will be disclosed with reference to the drawings. In the following descriptions, for explanation, multiple specific details are disclosed in order to provide overall understandings of one or more aspects. However, it will also be appreciated by those skilled in the art that this aspect(s) may be practiced without these specific details. The following descriptions and the accompanying drawings are provided for disclosing specific exemplary aspects of the one or more aspects in detail. However, these aspects are exemplary. Thus, some of the various methods in the principles of the various aspects may be used, and the descriptions are intended to include all such aspects and their equivalents. Specifically, "embodiment", "example", "aspect", "exemplary embodiment" and the like used in this specification may not be construed as any aspect or design described being better or more advantageous than other aspects or designs.

Hereinafter, the same or similar constituent elements are assigned with the same reference numerals regardless of reference numerals, and the repetitive description thereof will be omitted. In addition, in the description of the embodiment disclosed in the present specification, the specific descriptions of publicly known related technologies will be omitted when it is determined that the specific descriptions may obscure the subject matter of the embodiment disclosed in the present specification. In addition, the accompanying drawings are provided only to allow those skilled in the art to easily understand the embodiments disclosed in the present specification, and the technical spirit disclosed in the present specification is not limited by the accompanying drawings.

The terms used in the present specification are for explaining the exemplary embodiments, not for limiting the present disclosure. Unless particularly stated otherwise in the present specification, a singular form also includes a plural form. The term "comprise" and/or "comprising" used in the specification does not exclude existence or addition of one or more other constituent elements in addition to the mentioned constituent element.

Terms "first", "second", and the like may be used to describe various elements and components, but the elements and components are of course not limited by these terms. These terms are merely used to distinguish one element or component from another element or component. Therefore, the first element or component mentioned hereinafter may of course be the second element or component within the technical spirit of the present disclosure.

Unless otherwise defined, all terms (including technical and scientific terms) used in the present specification may be used as the meaning which may be commonly understood by the person with ordinary skill in the art, to which the present disclosure belongs. In addition, terms defined in a generally used dictionary shall not be construed in ideal or excessively formal meanings unless they are clearly and specially defined in the present specification.

The term "or" is intended to mean not an exclusive "or" but an inclusive "or". That is, unless specified or clear in context, "X uses A or B" is intended to mean one of the natural implicit substitutions. That is, "X uses A or B" can be applied to any of the cases where X uses A, X uses B, or X uses both A and B. Moreover, it is to be understood that the term "and/or" used in this specification refers to and includes all possible combinations of one or more of the listed related items.

When one constituent element is described as being "fixed," "connected," or "coupled" to another constituent element, it should be understood that one constituent element can be connected or coupled directly to another constituent element, and an intervening constituent element can also be present between the constituent elements. When one constituent element is described as being "fixed directly to," "connected directly to," or "coupled directly to" another constituent element, it should be understood that no intervening constituent element is present between the constituent elements.

The suffixes "module" and "unit" used to describe some constituent elements in the following description are used together or interchangeably in order to facilitate the description, but the suffixes themselves do not have distinguishable meanings or functions.

When an element or layer is referred to as being "on" another element or layer, it can be directly on the other element or layer or intervening elements or layers may be present. In contrast, when an element is referred to as being "directly on" another element or layer, there are no intervening elements or layers present.

Spatially relative terms, such as "below," "beneath," "lower," "above," "upper," and the like, may be used herein for ease of description of one constituent element or a correlation between one constituent element and other constituent elements, as illustrated in the drawings. It should be understood that the spatially relative terms encompass different orientations of the elements in use or operation in addition to the orientation depicted in the drawings.

For example, if the constituent element in the drawings is turned over, the constituent element described as "below" or "beneath" the other constituent element may then be placed "above" the other constituent element. Thus, the exemplary term "below" can encompass both orientations of above and below. The constituent elements may be oriented in different directions, and the spatially relative terms used herein may be interpreted in accordance with the orientations.

Objects and effects of the present disclosure and technical constituent elements for achieving the objects and effects will be clear with reference to the embodiments described in detail below together with the accompanying drawings. In addition, in the description of the present disclosure, the specific descriptions of publicly known functions or configurations will be omitted when it is determined that the specific descriptions may unnecessarily obscure the subject matter of the present disclosure. In addition, the terms used herein are defined considering the functions in the present disclosure and may vary depending on the intention or usual practice of a user or an operator.

However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present disclosure will be defined only by the scope of the appended claims. Therefore, the definition of the present disclosure should be made based on the entire contents of the present specification.

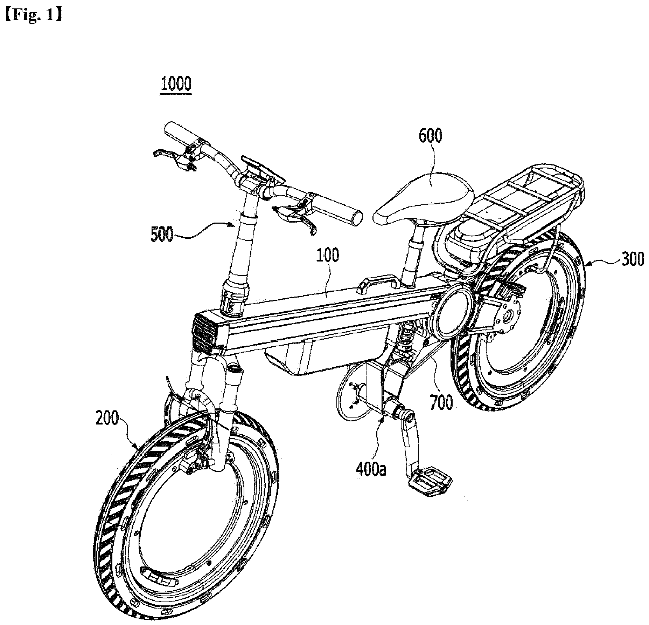

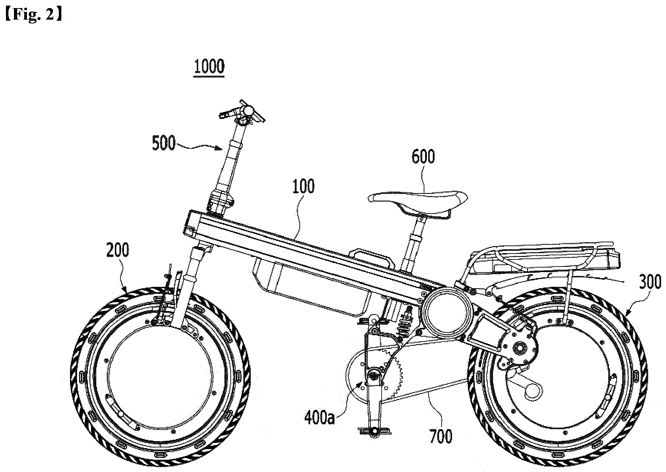

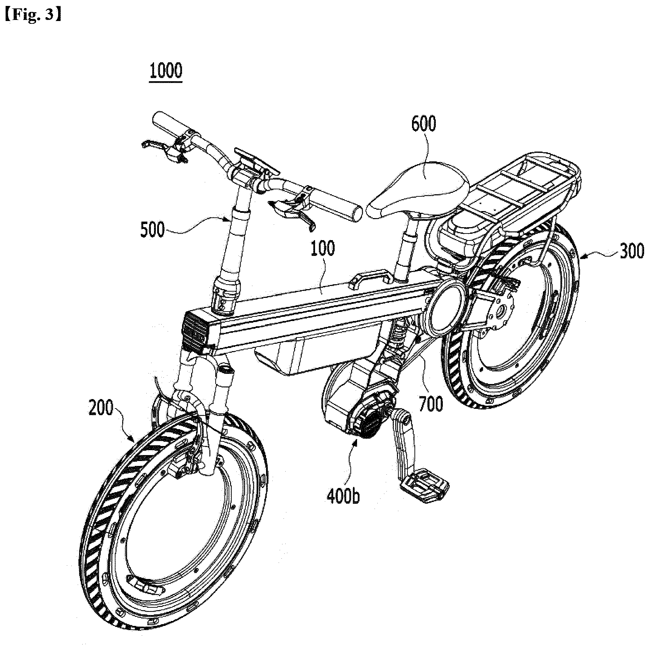

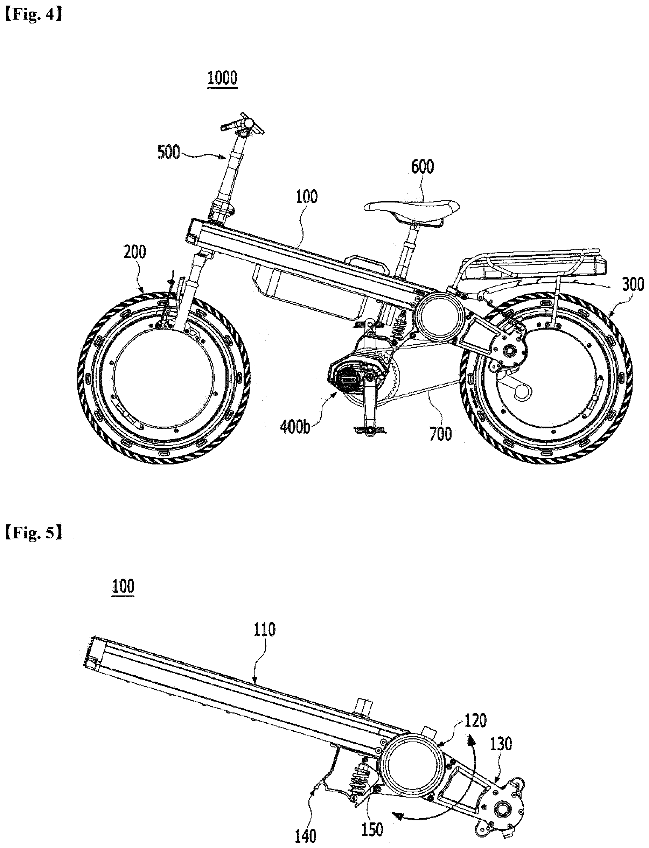

FIG. 1 is a perspective view of an electric mobility vehicle 1000 to which a manual pedal part 400a is connected according to several embodiments of the present disclosure. FIG. 2 is a top plan view of the electric mobility vehicle 1000 illustrated in FIG. 1. FIG. 3 is a perspective view of the electric mobility vehicle 1000 to which an electric motor part 400b is connected according to several embodiments of the present disclosure. FIG. 4 is a top plan view of the electric mobility vehicle 1000 illustrated in FIG. 3.

The electric mobility vehicle 1000 may be a personal transportation means of various electric types. For example, the electric mobility vehicle may include an electric bicycle, an electric kickboard, an electric wheelchair, and the like. In the present embodiment, the electric bicycle is described, for example, but the present disclosure is not limited thereto. Another electric mobility vehicle 1000 may be applied by being appropriately changed and modified by those skilled in the art.

The present disclosure may provide the electric mobility vehicle 1000 using an operation method of rotating a rim of a rear wheel 300 without using a hub and a spoke. The electric mobility vehicle 1000 of the present disclosure may have a design concept derived from a "hoop" of a shape of a traditional bicycle. Specifically, the electric mobility vehicle 1000 of the present disclosure may have a design without a hub and a spoke because the electric mobility vehicle 1000 transmits power through twin gears of the rear wheel 300. The electric mobility vehicle 1000 according to several embodiments of the present disclosure, which does not have a hub and a spoke, may provide a user's safety, structural stability of the electric mobility vehicle, and design improvement.

With reference to FIGS. 1 to 4, the electric mobility vehicle 1000 of the present embodiment may be an electric bicycle including a vehicle body frame 100 having a straight shape and having a cylindrical open-type joint, a front wheel 200 positioned at a front side of the vehicle body frame 1000 and having a hubless rim, the rear wheel 300 positioned at a rear side of the vehicle body frame 1000 and having a hubless rim, a power part 400 including the manual pedal part 400a or the electric motor part 400b, a handle part 500, a saddle 600 on which a user may be seated while stepping on pedals, a chain 700, and a control part (not illustrated). The above-mentioned configuration of the electric mobility vehicle 1000 is provided for illustrative purposes only. Some components may be excluded, or additional components may be further included.

In several examples, the vehicle body frame 100 may have a structure in which the power part 400 is separably connected. In this case, the power part 400 may include the manual pedal part 400a or the power motor part 400b. FIGS. 1 and 2 illustrate the electric mobility vehicle 1000 in which the manual pedal part 400a is connected to the vehicle body frame 100. Alternatively, FIGS. 3 and 4 illustrate the electric mobility vehicle 1000 in which the manual pedal part 400a is separated from the vehicle body frame 100 and the power motor part 400b is connected to the vehicle body frame 100. The electric mobility vehicle 1000 of the present disclosure may provide free manual-automatic interchangeability by separably connecting the power part 400. Therefore, the electric mobility vehicle 1000 of the present disclosure may provide a user with an electric mobility vehicle 1000 customized at a low cost.

In several examples, a middle portion of the vehicle body frame 100 may have a straight shape having a cylindrical open shape. For example, the vehicle body frame 100 may have the cylindrical open-type joint that is applicable in design for the hubless wheel. The cylindrical open-type joint of the vehicle body frame 100 may be made of a material such as Teflon having elasticity, thereby providing a suspension function. In addition, the cylindrical open-type joint of the vehicle body frame 100 is positioned at the straight middle portion of the vehicle body frame 100, and the cylindrical open-type joint may be used to fold the vehicle body frame 100. For example, in case that the vehicle body frame 100 is folded, a volume of the electric mobility vehicle 1000 may decrease. Therefore, the electric mobility vehicle 1000 may be easily accommodated in a carrying means such as a bag so that the electric mobility vehicle 1000 may be conveniently stored and carried.

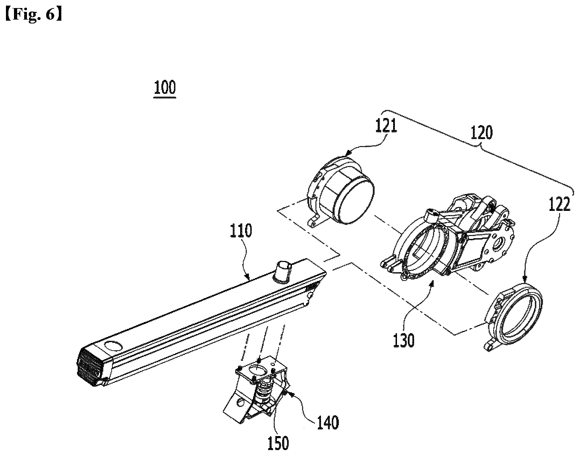

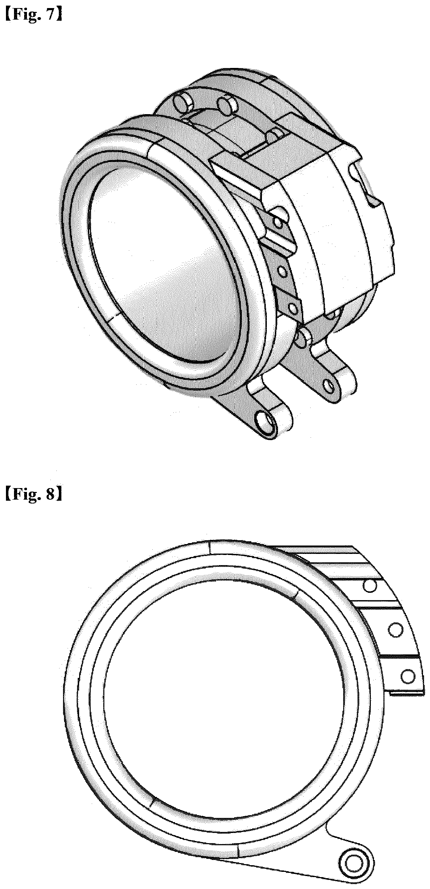

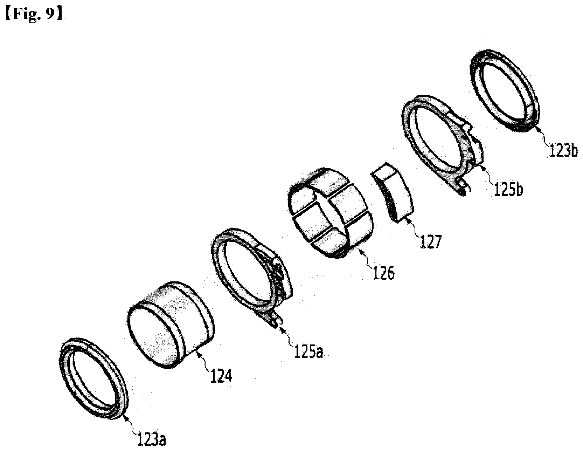

FIG. 5 is a view for explaining the foldable vehicle body frame 100 according to several embodiments of the present disclosure. FIG. 6 is an exploded view of the vehicle body frame 100 according to several embodiments of the present disclosure. FIG. 7 is a perspective view of a frame joint part 120 according to several embodiments of the present disclosure. FIG. 8 is a top plan view of the frame joint part 120 according to several embodiments of the present disclosure. FIG. 9 is an exploded view of the frame joint part 120 according to several embodiments of the present disclosure.

Hereinafter, an exemplary structure of the foldable vehicle body frame 100 according to several embodiments of the present disclosure will be described with reference to FIGS. 5 to 9.

As described above, the electric mobility vehicle 1000 according to several embodiments of the present disclosure may include the vehicle body frame 100 having a straight shape and having the cylindrical open-type joint. In several examples, with reference to FIG. 5, the vehicle body frame 100 may include a main frame 110 having a straight shape, a rear wheel fixing part 130 to which the rear wheel 300 is connected, and the frame joint part 120 formed as a cylindrical open type and configured to connect the main frame 110 and the rear wheel fixing part 130 so that the main frame 110 and the rear wheel fixing part 130 are rotatable.

With reference to FIG. 5, the vehicle body frame 100 may be folded about the frame joint part 120 disposed between the main frame 110 and the rear wheel fixing part 130. As described above, the folding function of the vehicle body frame 100 may reduce the volume of the electric mobility vehicle, thereby improving storability and portability.

With reference to FIG. 6, the rear wheel fixing part 130 may have a ring-shaped protruding portion that may be rotatably connected to an outer peripheral surface of the cylindrical open shape of the frame joint part 120. For example, the frame joint part 120 may be fixed as two opposite surfaces protruding forward from the cylindrical open shape are connected to a rear side of the main frame 110. In this case, an inner peripheral surface of the ring-shaped protruding portion of the rear wheel fixing part 130 may be rotatably connected to an outer peripheral surface of a circular portion formed between two parts 121 and 122 of the frame joint part 120. An outer peripheral surface of the frame joint part 120 may be configured by using a bushing onto which a lubricant is applied in order to allow the rear wheel fixing part 130 to easily rotate.

FIGS. 7 to 9 illustrate the exemplary frame joint part 120. As illustrated in FIG. 9, the frame joint part 120 may include a joint part bushing 124 having an outer peripheral surface to which the inner peripheral surface of the ring-shaped protruding portion of the rear wheel fixing part 130 is connected coaxially and rotatably. In addition, the frame joint part 120 may include a pair of frame blocks 125a and 125b disposed coaxially with the joint part bushing 124 and each having an inner peripheral surface in which one side of the joint part bushing 124 is accommodated.

In several examples, the pair of frame blocks 125a and 125b may respectively have frame block protruding portions protruding from outer peripheral surfaces of the frame blocks 125a and 125b and connected to a rear side of the main frame 110. For example, the frame block protruding portion may be shaped to be fitted with the rear side of the main frame 110. In case that the frame block protruding portion is fitted with the rear side of the main frame 110, the main frame 110 may be fixed by using a connection means such as a bolt.

The frame joint part 120 may include a pair of block locking caps 123a and 123b respectively connected to outer portions of the pair of frame blocks 125a and 125b to fix the joint part bushing 124. In this case, the pair of block locking caps 123a and 123b may fix the joint part bushing 124 so that the ring-shaped protruding portion disposed on the outer peripheral surface of the joint part bushing 124 is rotatable along the outer peripheral surface of the joint part bushing 124.

The frame joint part 120 may further include an intermediate frame block 127 disposed between the frame block protruding portions of the pair of frame blocks 125a and 125b. The intermediate frame block 127 restricts the folding of the vehicle body frame 100 to a predetermined range by means of a folding restriction protruding portion formed on an outer peripheral surface of a ring-shaped protruding portion of the rear wheel fixing part 130.

With reference to FIG. 9, the intermediate frame block 127 may be disposed between the frame block protruding portions of the pair of frame blocks 125a and 125b. In this case, the intermediate frame block 127 may have a shape and area identical or similar to a portion of the frame block protruding portion that protrudes from the frame block. With reference to FIG. 6, the ring-shaped protruding portion of the rear wheel fixing part 130 may have the circular folding restriction protruding portion provided at an upper end of the outer peripheral surface thereof. In addition, the ring-shaped protruding portion of the rear wheel fixing part 130 may have two triangular folding restriction protruding portions provided at a front side of the outer peripheral surface thereof. In case that the ring-shaped protruding portion of the rear wheel fixing part 130 is disposed on the joint part bushing 124, the intermediate frame block 127 may be positioned between the folding restriction protruding portions formed on the two portions of the outer peripheral surface of the ring-shaped protruding portion of the rear wheel fixing part 130. In this case, the rear wheel fixing part 130 may rotate until the folding restriction protruding portions come into contact with the intermediate frame block 127. Therefore, the folding of the vehicle body frame 100 may be restricted by an angle between the folding restriction protruding portions formed on the two portions of the outer peripheral surface of the ring-shaped protruding portion.

The frame joint part 120 may further include a suspension block 126 disposed between the outer peripheral surface of the joint part bushing 124 and the inner peripheral surface of the ring-shaped protruding portion of the rear wheel fixing part 130.

Specifically, the suspension block 126 may serve to mitigate friction between the frames. The suspension block, which is positioned in a space in which the main frame 110 and the rear wheel fixing part 130 are connected, may be made of an elastic material, thereby dispersing a load, mitigating road surface impact while the electric bicycle travels, improving convenience at the time of folding the electric bicycle, and improving durability. With reference to FIG. 9, the suspension block 126 may have a ring shape corresponding to the outer peripheral surface of the joint part bushing 124 and the inner peripheral surface of the ring-shaped protruding portion of the rear wheel fixing part 130. In several examples, as illustrated in FIG. 9, the suspension block 126 may include a plurality of parts disconnected from one another while defining a ring shape along a circumference thereof.

In several examples, the suspension block 126 may be made of Teflon. Teflon may be a fiber manufactured from polytetrafluoroethylene (PTFE) obtained by addition polymerization of tetrafluoroethylene. The suspension block made of Teflon may mitigate friction caused by the connection between the main frame 110 and the rear wheel fixing part 130, thereby improving the suspension function of the electric mobility vehicle and the durability of the vehicle body frame 100.

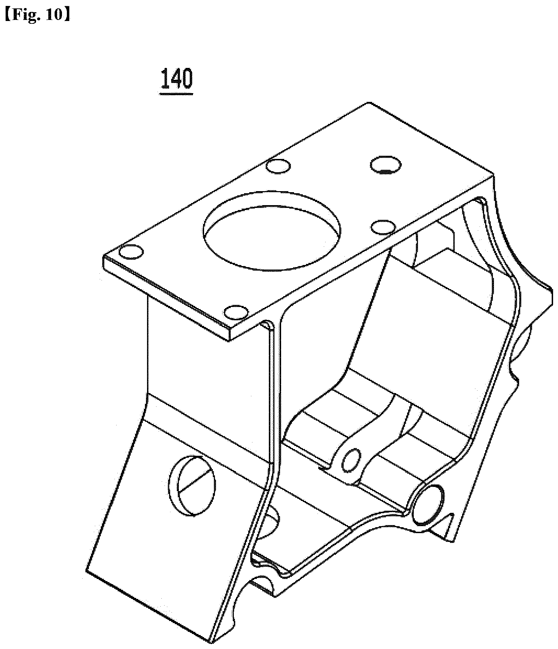

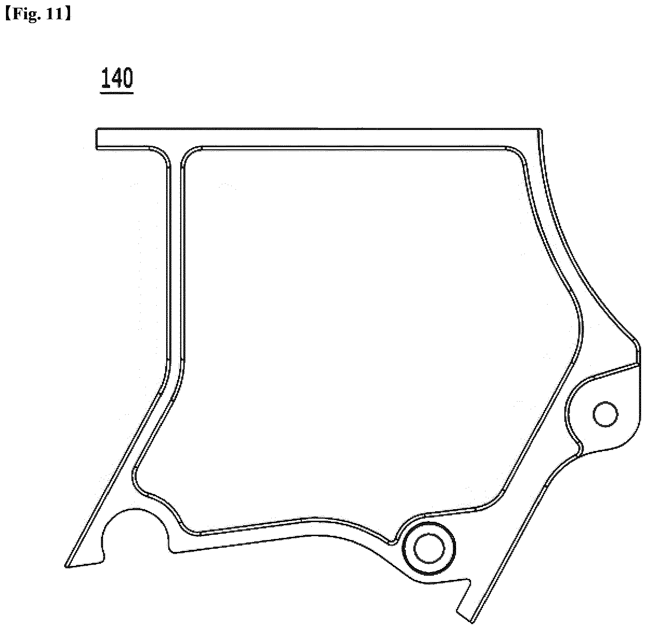

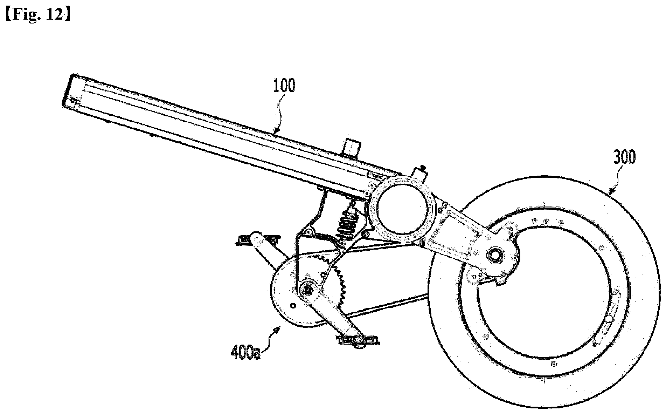

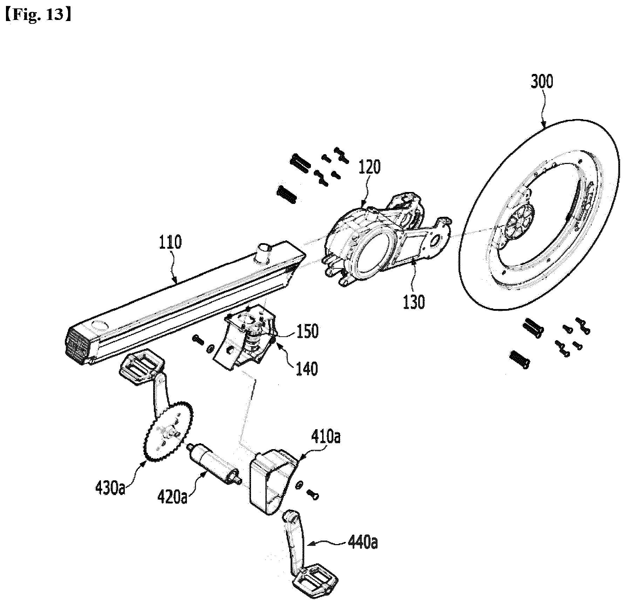

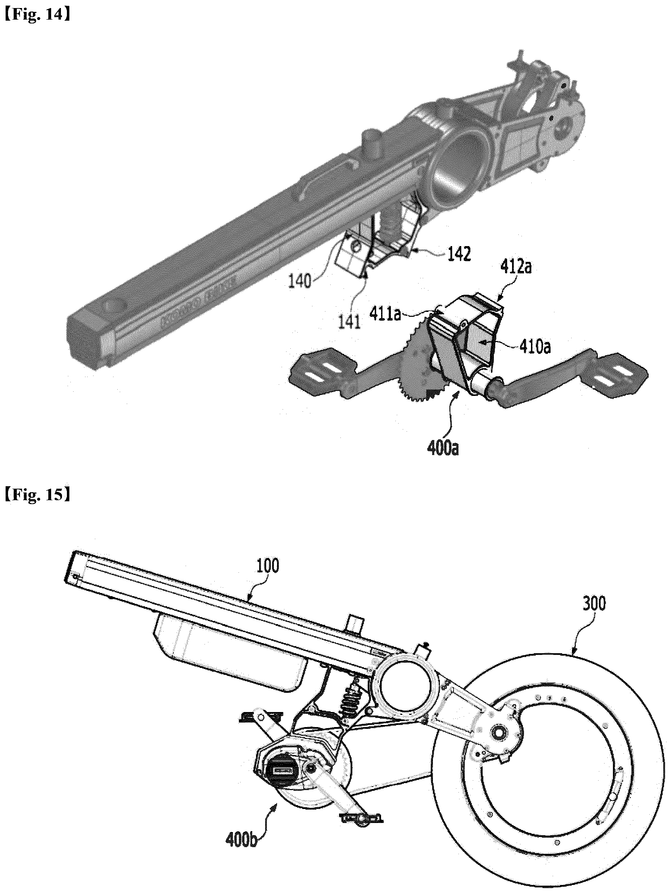

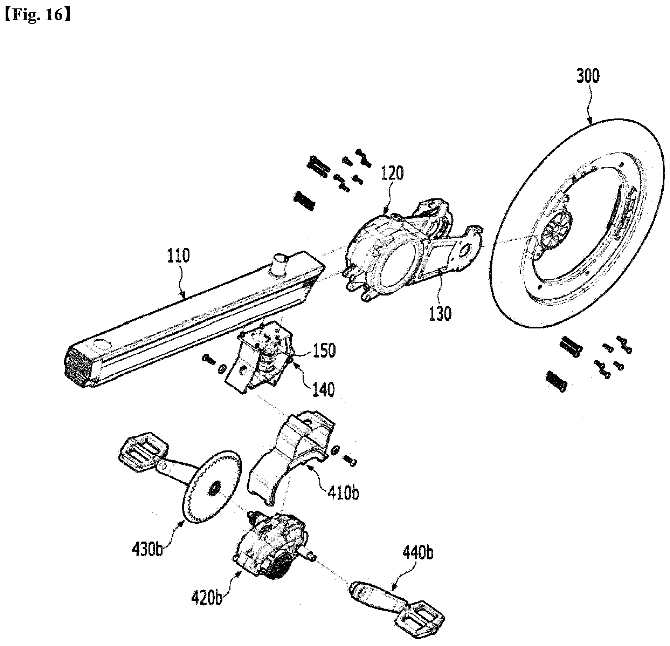

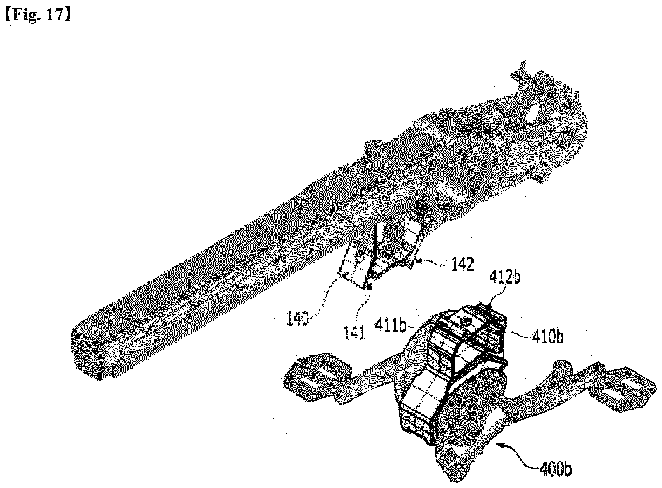

FIG. 10 is a perspective view of a power connection part 140 according to several embodiments of the present disclosure. FIG. 11 is a top plan view of the power connection part 140 according to several embodiments of the present disclosure. FIG. 12 is a partial view of the electric mobility vehicle 1000 to which the manual pedal part 400a is connected according to several embodiments of the present disclosure. FIG. 13 is an exploded view of FIG. 12. FIG. 14 is a view for explaining a process of connecting the manual pedal part 400a to the vehicle body frame 100 according to several embodiments of the present disclosure. FIG. 15 is a partial view of the electric mobility vehicle 1000 to which the electric motor part 400b is connected according to several embodiments of the present disclosure. FIG. 16 is an exploded view of FIG. 15. FIG. 17 is a view for explaining a process of connecting the electric motor part 400b to the vehicle body frame 100 according to several embodiments of the present disclosure.

According to several embodiments of the present disclosure, the vehicle body frame 100 may include the power connection part 140 that separably connects the power part 400. An exemplary structure of the vehicle body frame 100, which separably connects the power part 400, will be described with reference to FIGS. 10 to 16.

According to several embodiments of the present disclosure, the power connection part 140 may have a lower end shaped to be fitted with upper ends of vehicle body frame connection parts 410a and 410b of the power parts 400.

As described above, the electric mobility vehicle 1000 of the present disclosure may have the power connection part 140 that may be used to replace the power part 400 with the manual pedal part 400a or the power motor part 400b. In several examples, as illustrated in FIGS. 10 and 11, the power connection part 140 may have a hollow frame shape. Because the power connection part 140 has a hollow frame shape, the weight of the electric mobility vehicle may be reduced. In addition, the hollow frame shape may be suitable for the design of the front wheel 200 and/or the rear wheel 300 each having the hubless rim and the design of the vehicle body frame 100 having the cylindrical open-type joint.

In several examples, in case that the power connection part 140 has the hollow frame shape, the power connection part 140 may include a rear shock absorber 150 installed from an upper end and to a lower end of the hollow interior of the power connection part 140. The rear shock absorber 150 may provide a suspension function to improve the driving quality of the electric mobility vehicle 1000. In addition, the rear shock absorber 150 may serve as a design element by being positioned in the hollow interior of the power connection part 140.

In several examples, the power connection part 140 may be shaped to fit the power part 400 to easily connect the power part 400. For example, the power connection part 140 may have the lower end having a shape corresponding to protruding portions or grooves formed at upper ends of the vehicle body frame connection parts 410a and 410b of the power parts 400. Because the lower end of the power connection part 140 has a shape corresponding to the upper end of the power part 400, the user may replace the power part 400 without identifying a separate instruction. The plurality of replaceable power parts 400 may have the vehicle body frame connection parts 410a and 410b having the upper ends having the same shape. The upper ends of the plurality of vehicle body frame connection parts 410a and 410b may have the same shape so that the plurality of vehicle body frame connection parts 410a and 410b is interchangeable with each other in the power connection part 140. However, the lower ends of the plurality of vehicle body frame connection parts 410a and 410b may individually have appropriate shapes depending on the functions. As illustrated in FIG. 13, a lower end the vehicle body frame connection part 410a of the manual pedal part 400a may have a hole that accommodates a crankshaft connected to a pair of pedals 430a and 440a. Alternatively, as illustrated in FIG. 16, a lower end of the vehicle body frame connection part 410b of the electric motor part 400b may be shaped to surround an upper end of a motor 420b that accommodates a crankshaft coupled to a pair of pedals 430b and 440b. However, the present disclosure is not limited thereto, and the vehicle body frame connection parts 410a and 410b may have various shapes.

In several examples, the lower end of the power connection part 140 may be shaped to be fastened to the upper ends of the vehicle body frame connection parts 410a and 410b of the power parts 400 while sliding in a transverse direction. In this case, the lower end of the power connection part 140 may be shaped such that the power part 400 cannot be separated vertically. For example, the lower end of the power connection part 140 may have a protruding portion or groove having a tapered shape. In this case, the upper end of the power part 400 may have a tapered shape so as to correspond to the protruding portion or groove provided at the lower end of the power connection part 140. As another example, the lower end of the power connection part 140 may have a protruding portion or groove having an upper portion having a larger area than a lower portion thereof. In this case, the upper end of the power part 400 may have a shape having an upper portion having a larger area than a lower portion so as to correspond to the protruding portion or groove provided at the lower end of the power connection part 140. However, the present disclosure is not limited thereto. The lower end of the power connection part 140 may have various shapes that may be fastened to the upper ends of the vehicle body frame connection parts 410a and 410b of the power parts 400 while sliding in the transverse direction.

In several examples, the lower end of the power connection part 140 may have at least one power connection groove. The upper ends of the vehicle body frame connection parts 410a and 410b of the power parts 400 may each have at least one vehicle body frame connection protruding portion having a shape corresponding to at least one power connection groove. With reference to FIGS. 10 and 11, the lower end of the exemplary power connection part 140 may have two power connection grooves. As illustrated in FIGS. 10 and 11, one of the two power connection grooves may be a first power connection groove 141 positioned at a front side and having a circular shape. In this case, with reference to FIGS. 14 and 17, the upper ends of the vehicle body frame connection parts 410a and 410b may have first vehicle body frame connection protruding portions 411a and 411b that may be fitted with the first power connection groove 141. In addition, as illustrated in FIGS. 10 and 11, the other of the two power connection grooves may be a second power connection groove 142 positioned at a rear side and an inclined triangular shape. In this case, the upper ends of the vehicle body frame connection parts 410a and 410b may have vehicle body frame connection protruding portions 412a and 412b that may be fitted with the second power connection groove 142. FIGS. 14 and 17 illustrate a process in which the power part 400 is separably connected to the vehicle body frame as the lower end of the power connection part 140 is fastened to the upper end of the vehicle body frame connection parts 410a or 410b of the power parts 400, which is the manual pedal part 400a or the power motor part 400b, while sliding in the transverse direction.

In other examples, the lower end of the power connection part 140 may have at least one power connection protruding portion, and the upper ends of the vehicle body frame connection parts 410a and 410b of the power parts 400 may each have at least one vehicle body frame connection groove having a shape corresponding to at least one power connection protruding portion. Unlike FIGS. 10 and 11, the lower end of the power connection part 140 may have a power connection protruding portion. In this case, the upper ends of the vehicle body frame connection parts 410a and 410b of the power parts 400 may each have a groove into which the power connection protruding portion provided at the lower end of the power connection part 140 may be fitted.

In several examples, the lower end of the power connection part 140 may have at least one power connection groove and at least one power connection protruding portion. The upper ends of the vehicle body frame connection parts 410a and 410b of the power parts 400 may each have at least one vehicle body frame connection protruding portion and at least one vehicle body frame connection groove having shapes corresponding to at least one power connection groove and at least one power connection protruding portion. Unlike FIGS. 10 and 11, the lower end of the power connection part 140 may have a shape having a combination of a power connection protruding portion and a power connection groove combination. In this case, the upper ends of the vehicle body frame connection parts 410a and 410b of the power parts 400 may each be shaped to have a combination of the vehicle body frame protruding portion, which may be fitted with the power connection groove provided at the lower end of the power connection part 140, and the vehicle body frame connection groove that may be fitted with the power connection protruding portion provided at the lower end of the power connection part 140. The present disclosure is not limited thereto. The power connection part 140 may have various shapes that may be fitted with the power part 400 in order to easily connect the power part 400.

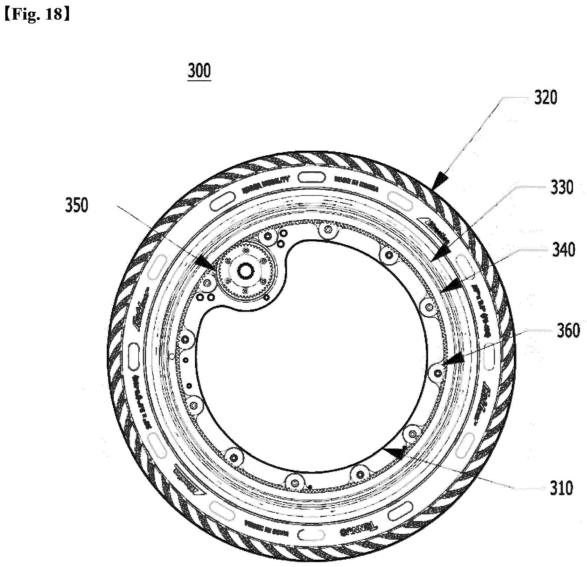

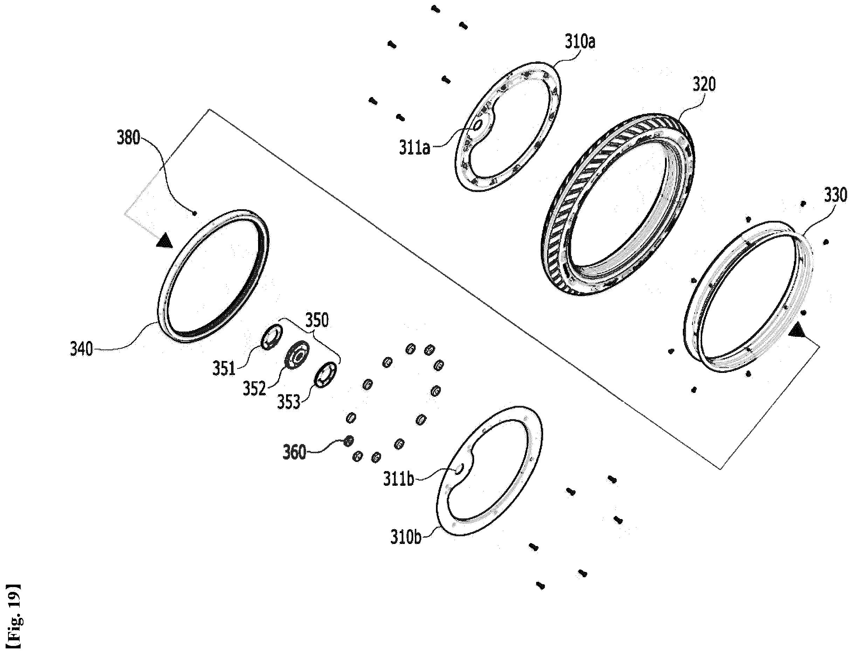

FIG. 18 is a top plan view of the rear wheel 300 according to several embodiments of the present disclosure. FIG. 19 is an exploded view of the rear wheel 300 according to several embodiments of the present disclosure.

According to several embodiments of the present disclosure, the electric mobility vehicle 1000 may have the rear wheel 300 positioned rearward of the vehicle body frame 100. With reference to FIGS. 18 and 19, the rear wheel 300 may include a pair of bearing guides 310, an airless tire 320, a hubless rim 330, twin output gears 340, twin input gears 350, lubrication bearings 360, and a speed sensor recognition magnet 370. The above-mentioned configuration of the rear wheel 300 is provided for illustrative purposes only. Some components may be excluded, or additional components may be further included.

According to several embodiments of the present disclosure, the rear wheel 300 may have the twin output gears 340 provided on an inner peripheral surface of the hubless rim 330. With reference to FIGS. 18 and 19, the twin output gears 340 may be attached to the inner peripheral surface of the hubless rim 330 by using connection means such as bolts. In this case, the twin output gears 340 may be fixed to the hubless rim 330 and configured to rotate coaxially with the hubless rim 330. When the twin output gears 340 receive power, the hubless rim 330, to which the twin output gears 340 is attached, rotate, and the tire 320 attached to an outer peripheral surface of the hubless rim 330 rotates, such that the electric mobility vehicle 1000 may operate. The twin output gears 340 of the rear wheel 300 reduce a case in which a connection shaft of the input gear and a connection shaft of the output gear are misaligned in comparison with a case in which a single output gear is used. Therefore, it is possible to provide an effect of improving the structure stability of the electric mobility vehicle 1000 having the rear wheel 300 that does not use a hub and a spoke.

According to several embodiments of the present disclosure, the rear wheel 300 may have the twin input gears 350 that engage with the twin output gears 340. In several examples, with reference to FIG. 19, a first input gear 351 may engage with one of the twin output gears 340, a second input gear 353 may engage with the other of the twin output gears 340, and a drive gear 352 may be positioned between the first input gear 351 and the second input gear. The drive gear 352 may receive power transmitted from the power part 400. In this case, the drive gear 352 may transmit power to the twin output gears 340 through the first input gear 351 and the second input gear 353 attached to two opposite sides thereof.

According to several embodiments of the present disclosure, the drive gear 352 may have a larger diameter than each of the first and second input gears 351 and 352. The drive gear 352, which has a larger diameter than the input gears attached to the two opposite sides thereof, is stably positioned between the two twin output gears 340 when the electric mobility vehicle 1000 operates. Therefore, it is possible to provide an effect of further improving the structure stability of the electric mobility vehicle 1000.

According to several embodiments of the present disclosure, the twin output gears 340 may include two helical gears. In this case, the twin input gears 330 may include two helical gears that respectively engage with the two helical gears of the twin output gears 340. In several examples, the two helical gears may have oblique shapes symmetric to each other. In case that the two helical gears have the oblique shapes symmetric to each other, two forces applied to the two opposite sides of the twin input gears 330 may be mitigated as the two helical gears engage with the twin output gears 340. Therefore, the symmetric oblique shapes of the two helical gears may provide an effect of preventing the connection shaft of the input gear and the connection shaft of the output gear from being misaligned.

According to several embodiments of the present disclosure, the rear wheel 300 may further include the pair of bearing guides 310 respectively having twin input gear accommodation portions 311a and 311b configured to accommodate the twin input gears 330 coaxially. With reference to FIG. 19, the twin input gear accommodation portions 311a and 311b may each include an opening through which the crankshaft, which transmits power transmitted from the power part 400, passes. In this case, the twin input gear accommodation portions 311a and 311b may be disposed coaxially with the twin input gears 330 positioned between the pair of bearing guides 310 by means of the crankshaft passing through the openings. In several examples, with reference to FIGS. 18 and 19, the twin input gear accommodation portions 311a and 311b may each have a circular shape protruding inward from a part of an inner peripheral surface of the main bearing guide having a ring shape. In this case, with reference to FIGS. 13 and 16, the twin input gear accommodation portions 311a and 311b are fixed between two opposite inner surfaces of a rear side of the rear wheel fixing part 130, such that the rear wheel 300 may be positioned rearward of the vehicle body frame 100. In this case, the inner surfaces of the rear side of the rear wheel fixing part 130 may each have an opening through which the crankshaft connected to the drive gear 352 passes. Additionally, with reference to FIGS. 18 and 19, at least one lubrication bearing 360 may be disposed on the main bearing guide. At least one lubrication bearing 360 may serve to stably transmit power to the rear wheel.

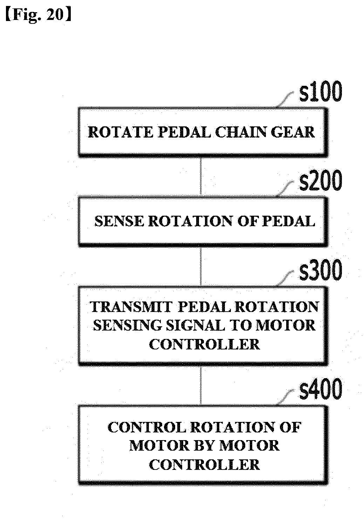

FIG. 20 is a flowchart for explaining an operation of the electric mobility vehicle 1000 according to several embodiments of the present disclosure.

An exemplary operation of the electric mobility vehicle 1000 according to several embodiments of the present disclosure, which is an electric bicycle of a PAS (pedal assist system) type, will be described with reference to FIG. 20.

For example, the user may rotate a pedal chain gear coaxially connected to the pedals of the power part 400 of the electric mobility vehicle 1000 (s100). In this case, for example, the rotations of the pedals may be sensed by a PAS sensor (e.g., torque sensor) connected to the pedal chain gear (s200). In case that the rotations of the pedals are sensed by the PAS sensor, a rotation sensing signal may be transmitted to a control part that is a motor controller (s300). In this case, the control part may detect a pedal effort of the pedal by using the PAS sensor and control the rotation of the electric motor of the drive motor part in order to initiate the rotation of the motor (s400).

Specifically, the PAS type electric bicycle may measure the pedal effort applied to the pedal. The control part may increase the output of the electric motor of the drive motor part as the pedal effort applied to the pedal increases. As a result, a traveling speed of the electric bicycle may increase in proportion to the increase in output of the electric motor. Therefore, the PAS type electric bicycle may allow the driver to actively control the output of the electric motor of the electric bicycle on the basis of the pedal effort applied to the pedal by the driver. In addition, in case that the electric bicycle travels on an upward slope, the pedal effort applied to the pedal may be measured by the PAS sensor, and the output of the electric motor of the electric bicycle may be increased, such that a traveling speed may be maintained to be a traveling speed at which the electric bicycle travels on the flat ground.

The description of the provided embodiments is provided to enable any person skilled in the art of the present disclosure to carry out or use the present disclosure. Various modifications to the embodiments will be apparent to those skilled in the art of the present disclosure, and the generic principles defined herein may be applied to other embodiments without departing from the scope of the present disclosure. Accordingly, it should be understood that the present disclosure is not limited to the embodiments presented herein but should be construed in the broadest scope consistent with the principles and novel features presented herein.

## Claims

1. An electric mobility vehicle comprising:
a vehicle body frame; and
a rear wheel positioned rearward of the vehicle body frame and having a hubless rim and twin output gears provided on an inner peripheral surface of the hubless rim.

2. The electric mobility vehicle of claim 1, wherein the rear wheel has twin input gears configured to engage with the twin output gears.

3. The electric mobility vehicle of claim 2, wherein the twin input gears comprise:
a first input gear configured to engage with one of the twin output gears;
a second input gear configured to engage with the other of the twin output gears; and
a drive gear positioned between the first input gear and the second input gear.

4. The electric mobility vehicle of claim 3, wherein the drive gear has a larger diameter than each of the first and second input gears.

5. The electric mobility vehicle of any one of claims 1 to 4, wherein the twin output gears include two helical gears.

6. The electric mobility vehicle of claim 5, wherein the two helical gears have oblique shapes symmetric to each other.

7. The electric mobility vehicle of any one of claims 2 to 4, wherein the rear wheel further comprises a pair of bearing guides respectively having twin input gear accommodation portions configured to accommodate the twin input gears coaxially.

8. The electric mobility vehicle of claim 7, wherein the pair of bearing guides each has a main bearing guide on which at least one lubrication bearing is installed.

9. The electric mobility vehicle of claim 1, wherein the rear wheel further comprises a tire attached to an outer peripheral surface of the hubless rim.

10. The electric mobility vehicle of claim 1, wherein the vehicle body frame has a straight shape having a cylindrical open-type joint.

11. The electric mobility vehicle of claim 10, wherein the vehicle body frame comprises:
a main frame having a straight shape;
a rear wheel fixing part to which the rear wheel is connected; and
a frame joint part formed as a cylindrical open type and configured to connect the main frame and the rear wheel fixing part so that the main frame and the rear wheel fixing part are rotatable.

12. The electric mobility vehicle of claim 1, further comprising:
a front wheel positioned forward of the vehicle body frame and having a hubless rim.

13. A rear wheel for an electric mobility vehicle comprising a vehicle body frame, the rear wheel being positioned rearward of the vehicle body frame and comprising:
a hubless rim; and
twin output gears provided on an inner peripheral surface of the hubless rim.
